# EUROPÄISCHE PATENTANMELDUNG

(11) **EP 1 795 999 A1**
(43) Veröffentlichungstag der Anmeldung: **13.06.2007**
(21) Anmeldenummer: 05026963.8
(22) Anmeldetag: 09.12.2005
(51) Int. Cl.: G06F 9/44, G05B 19/05

(54) **Verfahren und System zur Transformation von Elementen eines in einer Kontaktplandarstellung vorliegenden Steuerungsprogramms in eine Funktionsplandarstellung**

(71) Anmelder: SIEMENS AKTIENGESELLSCHAFT, 80333 München (DE)
(72) Erfinder: Opaterny, Thilo, 90453 Nürnberg (DE)

(57) **Zusammenfassung**

Die Erfindung betrifft ein Verfahren und System zur Transformation von Elementen (1) eines in einer Kontaktplandarstellung vorliegenden Steuerungsprogramms (2) in eine Funktionsplandarstellung gelöst, wobei das Steuerungsprogramm (2) mindestens ein Netzwerk (3) mit Elementen (1) aufweist, welche mit ihren Ein-/Ausgängen (4) und/oder Operanden (5) untereinander verbindbar sind, wobei das System Mittel (8) zur Transformation von Parallelschaltungen von Elementen (1) in je ein ODER-Element (10) und Reihenschaltungen von Elementen (1) in je ein UND-Element (11) auf Basis eines rekursiven Regelwerks aufweist. Durch die Umwandlung der Reihenschaltungen in UND-Elemente (11) sind die gewünschten Operanden (5) zur Abfrage eines Zwischenergebnisses erreichbar und können auf eine Spule verschaltet werden. Diese oder Kombinationen davon finden sich in der jeweiligen Berechnung eines UND-Elements (11) wieder.

## Beschreibung

Die Erfindung betrifft ein Verfahren zur Transformation von Elementen eines in einer Kontaktplandarstellung vorliegenden Steuerungsprogramms in eine Funktionsplandarstellung, wobei das Steuerungsprogramm mindestens ein Netzwerk mit Elementen aufweist, welche mit ihren Ein-/Ausgängen und/oder Operanden untereinander verbunden sind. Die Erfindung betrifft ein dazu korrespondierendes System.

Die Norm IEC 61131 beschreibt verschiedene Programmiersprachen für die Programmierung von speicherprogrammierbaren Steuerungen (SPS). Eine der dort genannten graphischen Programmiersprachen ist die Funktionsbausteinsprache bzw. Funktionsplansprache (FUP), eine andere graphische Programmiersprache ist der Kontaktplan (KOP). In KOP erfolgt die Programmierung mit Kontakten und Spulen. Diese bewährte und auf vielen technischen Anwendungsgebieten übliche Darstellungsform hat ihren Ursprung in der Relaistechnik. Alle nicht booleschen Verknüpfungen werden in Form von Kästen dargestellt. In FUP werden auch die booleschen Verknüpfungen mit Kästen in Form von Gattern dargestellt. Bis auf die booleschen Verknüpfungen besteht zwischen FUP und KOP kaum ein Unterschied.

Die Norm erklärt die Semantik der einzelnen Sprachelemente, jedoch nicht die Abbildung der graphischen Sprachen auf den in der SPS vorhandenen Mikrocontroller. Während die Abbildung von Textsprachen wie Structured-Text (ST) oder Anweisungsliste (AWL) nahe liegend ist - jedes sprachliche Konstrukt wird auf mehrere Mikrocontrollerbefehle abgebildet - ist die Abbildung von graphischen Programmiersprachen nicht trivial, weil Abhängigkeiten und versteckte Rückkopplungen existieren können.

Oftmals müssen Steuerungsprogramme in einer bestimmten Sprache, beispielsweise in FUP, vorliegen, um problemlos in einem Arbeitsumfeld beispielsweise eines Automobilherstellers einsetzbar zu sein. Ist dieses Steuerungsprogramm bereits in einer anderen vorhanden, beispielsweise in KOP, so wird ein System zur Sprachumwandlung benötigt.

Ein bekanntes Beispiel für die Umsetzung der Norm in ein Entwicklungswerkzeug ist Step7, welches eine Transformation zumindest der drei Basissprachen KOP, FUP und AWL ineinander ohne Informationsverlust erlaubt, wenn ein Steuerungsprogramm in KOP dargestellt werden kann.

Allerdings hat Step7 den Nachteil, dass nicht alle Netzwerke, wie sie in der IEC 61113 beschrieben sind, auch realisiert werden können. So ist es in Step7 nicht erlaubt, Zuweisungen in Parallelschaltungen einzusetzen. Grund dafür ist, dass letztlich ein Steuerungsprogramm in KOP immer über FUP und im Anschluss auf AWL abgebildet bzw. umgewandelt wird. Jedoch existieren bestimmte KOP-Zwischenergebnisse nach der Transformation nicht mehr in FUP. Die letztere Darstellung des Steuerungsprogramms wird aber benötigt, um das Steuerungsprogramm als eine Folge von Einzelanweisungen auf einer Zielmaschine, wie z.B. einem Mikrocontroller, ausführen zu können. Die Anweisungsliste lässt sich in genau der Reihenfolge abbilden, in der sie niedergeschrieben ist. Bei Steuerungsprogrammen, welche in graphischer Programmiersprache vorliegen, ist dies jedoch nicht so einfach möglich. Bei der graphischen Programmierung zeichnet der Anwender üblicherweise ein Netzwerk mittels eines Editors. Er hat die Möglichkeit, einzelne Elemente aus einer Bibliothek auszuwählen, zu platzieren, zu beschriften und zu verbinden. Dabei werden dem Anwender üblicherweise keine Vorgaben über die Reihenfolge der einzelnen Schritte gemacht. Der Editor gibt schließlich eine Repräsentation der graphischen Information an den Compiler weiter.

Ein großes Problem entsteht nun, wenn nach einer Übersetzung der Anweisungsliste (AWL) in ein Maschinenprogramm und nach Ausführen dieses Programms durch einen Mikrocontroller die technische Anlage nicht ordnungsgemäß funktioniert. Denn im Vergleich zur Simulation eines Steuerungsprogramms in einer Entwicklungsumgebung ist eine Unterbrechung einer Anlage nicht ohne weiteres möglich, um den Fehler zu beheben. Dies ist z.B. bei Aufzügen, Pressen, Reaktoren der Fall, die nicht sofort stillgesetzt werden können.

Aus diesem Grund wäre es von Vorteil, wenn möglichst viele Zwischenergebnisse in KOP auch in FUP verfügbar wären.

Der Erfindung liegt die Aufgabe zugrunde, eine Transformation von Elementen eines in einer Kontaktplandarstellung vorliegenden Steuerungsprogramms in eine Funktionsplandarstellung ohne Einschränkungen zu erreichen.

Diese Aufgabe wird durch ein Verfahren zur Transformation von Elementen eines in einer Kontaktplandarstellung vorliegenden Steuerungsprogramms in eine Funktionsplandarstellung gelöst, wobei das Steuerungsprogramm mindestens ein Netzwerk mit Elementen aufweist, welche mit ihren Ein-/Ausgängen und/oder Operanden untereinander verbunden sind, wobei Parallelschaltung in je ein ODER-Element und Reihenschaltungen in je ein UND-Element auf Basis eines rekursiven Regelwerks umgewandelt werden.

Diese Aufgabe wird durch ein System zur Transformation von Elementen eines in einer Kontaktplandarstellung vorliegenden Steuerungsprogramms in eine Funktionsplandarstellung gelöst, wobei das Steuerungsprogramm mindestens ein Netzwerk mit Elementen aufweist, welche mit ihren Ein-/Ausgängen und/oder Operanden untereinander verbindbar sind, wobei das System Mittel zur Transformation von Parallelschaltungen in je ein ODER-Element und Reihenschaltungen in je ein UND-Element auf Basis eines rekursiven Regelwerks aufweist.

Der Erfindung liegt die Erkenntnis zugrunde, dass ein Steuerungsprogramm, welches in einer Kontaktplandarstellung vorliegt, bei bisher bekannten Verfahren nur unzureichend in eine Funktionsplandarstellung umgewandelt werden konnte. Um die Möglichkeit einer sicheren Rücktransformation zu gewährleisten, musste bis jetzt auf Zuweisungen in einer Parallelschaltung im Netzwerk des Steuerungsprogramms verzichtet werden. Damit verbunden war auch kein Zugriff mehr auf Zwischenergebnisse des Netzwerkes in der Funktionsdarstellung möglich, wie dies bei der Darstellung des Netzwerks im Kontaktplan möglich ist. Durch das erfindungsgemäße Verfahren ist eine automatisierte und schnelle Umwandlung der Parallel- und Reihenschaltungen der Elemente in entsprechende ODER- und UND-Elemente möglich.

Erfindungsgemäß sind nun die gewünschten Operanden zur Abfrage eines Zwischenergebnisses durch die Umwandlung der Reihenschaltungen in UND-Elemente erreichbar. Diese oder Kombinationen davon finden sich in der jeweiligen Berechnung eines UND-Elements wieder. Weist das Netzwerk ein speicherndes Element zwischen einem Zusammenführungsknoten einer Parallelschaltung und einem Kontakt auf, der dem Zusammenführungsknoten vorgeschaltet ist, so kann das Zwischenergebnis der direkt vorgeschalteten und logisch verknüpften Operanden gespeichert und auch in der Funktionsplandarstellung erreicht werden.

Gemäß einer vorteilhaften Ausgestaltung der Erfindung wird der Ausgang des jeweiligen UND-Elements mit einem Eingang des ODER-Elements verbunden, wobei Eingänge der jeweiligen UND-Elemente mit dem Operanden des zumindest einen Elements in der jeweiligen Reihenschaltung verbunden werden und wobei ein weiterer Eingang mit dem Operanden des der Reihenschaltung vorgeschalteten Elements verbunden wird.

Insbesondere kann das Netzwerk Kontakte, insbesondere Schließer, Öffner, Flankenerkenner oder Vergleicher, zur Abfrage der Operanden aufweisen, wobei die Kontakte oder kontaktähnlichen Elemente keine speichernde Funktion aufweisen.

Bei der Umwandlung von der Kontaktplandarstellung in die Funktionsplandarstellung wird der Operand eines jeden Kontakts, der mit einer Stromschiene als Quelle für den Signalfluss verbunden ist, in einen Eingang eines nachfolgenden Elements umgewandelt.

Insbesondere weist das Netzwerk speichernde Elemente wie Flipflops oder Spulen auf. Auf diese Weise können interne Zustände des Netzwerks im Sinne eines Schaltwerks weiterverarbeitet werden.

Weist das Netzwerk zumindest ein Negationselement auf, so wird bei der Transformation ein zugehöriger Eingang eines zumindest nachfolgenden Elements negiert. Dadurch ist eine kompaktere Darstellung der Elemente in der Funktionsplandarstellung vorteilhaft möglich.

Ergibt die Prüfung im Rahmen der Transformation, dass die jeweiligen untereinander verbundenen Ein- und Ausgänge bzw. Operanden der Elemente zueinander nicht kompatibel sind, so kann in vorteilhafter Weise eine Rückmeldung an den Anwender ausgegeben werden. Dies ist z.B. dann der Fall, wenn eine Verbindung vom Typ "bit", die andere Verbindung vom Typ "int" ist. Der Anwender kann daraufhin das in der Kontaktplandarstellung vorliegende Steuerungsprogramm derart verändern, dass eine Transformation möglich ist. Hierzu können dem Anwender geeignete Informationen durch die Rückmeldung gegeben werden.

Das System weist vorteilhaft einen Graphikeditor zur Eingabe und/oder Änderung des Netzwerks in der Kontaktplandarstellung und/oder in der Funktionsplandarstellung auf. Durch die graphische Eingabemöglichkeit, wie z.B. mittels einer Maus, können Änderungen besonders schnell bewerkstelligt werden.

Weist das System Umwandlungsmittel zur Umwandlung der graphischen Elemente des Steuerprogramms in maschinennahe Befehle des Steuerprogramms auf, so können diese auf einer speicherprogrammierbaren Steuerung zur Steuerung und/oder Regelung eines technischen Prozesses und/oder einer technischen Anlage ausgeführt werden.

Nachfolgend wird die Erfindung anhand der in den Figuren dargestellten Ausführungsbeispiele näher beschrieben und erläutert.

Dabei zeigt
- FIG 1: ein System zur Transformation von Elementen eines in Kontaktplandarstellung vorliegenden Steuerungsprogramms in eine Funktionsplandarstellung,
- FIG 2: das Netzwerk des Steuerungsprogramms in Kontaktplandarstellung gemäß FIG 1,
- FIG 3: ein zum Netzwerk des Steuerungsprogramms aus FIG 1 äquivalentes Netzwerk,
- FIG 4: das Netzwerk gemäß FIG 2 in erweiterter graphischer Kontaktplandarstellung,
- FIG 5: das Netzwerk gemäß FIG 3 in erweiterter graphischer Funktionsplandarstellung,
- FIG 6: Beispiele von transformierten Kontakten bzw. kontaktähnlichen Elementen,
- FIG 7: Beispiele von transformierten Reihenschaltungen, einer Stromschienenanbindung und Negationselementen,
- FIG 8: ein aus dem Netzwerk gemäß FIG 2 transformiert optimiertes Netzwerk in Funktionsplandarstellung,
- FIG 9: ein Beispiel eines Netzwerks in Kontaktplandarstellung mit einer Zuweisung in einer Parallelschaltung des Netzwerks gemäß der Erfindung und
- FIG 10: das zugehörige transformierte Netzwerk in der Funktionsplandarstellung.

Die Erfindung wird anhand von mehreren Ausführungsbeispielen beschrieben.

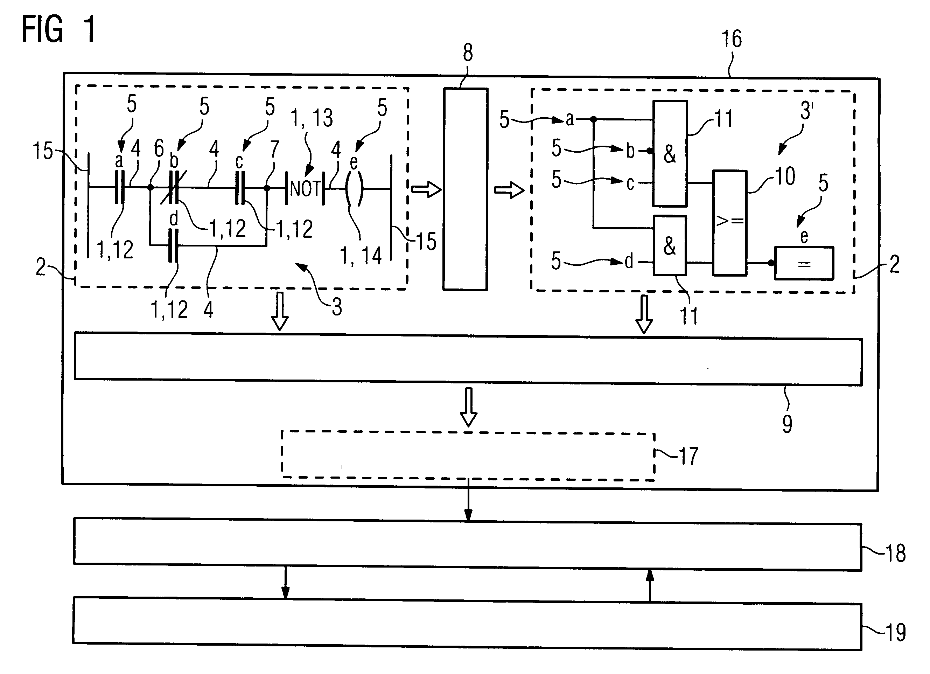

FIG 1 zeigt ein System zur Transformation von Elementen 1 eines in Kontaktplandarstellung vorliegenden Steuerungsprogramms 2 in eine Funktionsplandarstellung. Das Steuerungsprogramm 2 weist ein Netzwerk 3 auf, welches Elemente 1 aufweist, welche über ihre Ein- und Ausgänge 4 teilweise untereinander und teilweise mit Operanden 5 verbunden sind.

Die Operanden 5 adressieren dabei ein Stück Speicher, z.B. Speicher der SPS. Speicher können z.B. Register, Datenspeicher, ein Stack, Ein-/Ausgänge bzw. deren Speicherabbild sein. Die Operanden 5 dienen als Informationsquellen oder Informationssenken. Das Betriebssystem der SPS bildet die physikalischen Eingänge, an welche Taster, induktive Signalgeber, Lichtschranken usw. angeschlossen sind, auf einen durch das Programm adressierbaren Speicher ab. Ein anderer Speicherbereich wird vom Betriebssystem der SPS auf die physikalischen Ausgänge abgebildet, an die Lampen, Relais, Schütze, Motoren oder sonstige Aktoren, die mehr oder weniger direkt angeschlossen sind. Diese Ein- und Ausgänge bekommen üblicherweise symbolische Namen, wie z.B. "Motor_Endschalter .links" für den Eingang I4.7.

Mit dem Bezugszeichen 8 ist ein Mittel zur Transformation der Zusammenführungsknoten 7 in je ein ODER-Element 10 und zur Transformation von Reihenschaltungen in je ein UND-Element 11 bezeichnet.

Das Abbild des transformierten Netzwerks 3' ist in einem gestrichelt dargestellten Kasten des Steuerungsprogramms 2 dargestellt. Das transformierte Netzwerk 3' weist eine Vielzahl von Logikgattern, wie z.B. zwei UND-Gatter 11, ein ODER-Gatter 10 oder ein Speicherelement auf. Negierte Ein- oder Ausgänge werden in Form von Kringeln am Eingang bzw. am Ausgang des jeweiligen Gatters dargestellt.

Umwandlungsmittel 9 wandeln nun die graphischen Elemente 1 des Steuerprogramms 2 in maschinennahe Befehle 17 des Steuerprogramms 2 um, so dass diese auf einer speicherprogrammierbaren Steuerung 18 zur Steuerung und/oder Regelung eines technischen Prozesses und/oder einer technischen Anlage 19 ausgeführt werden können. Die Erstellung der verschiedenen Darstellungen des Steuerprogramms 2 sowie der maschinennahen Befehle 17 aus dem Steuerungsprogramm 2 erfolgt gemäß Ausführungsbeispiel innerhalb eines Entwicklungssystems 16.

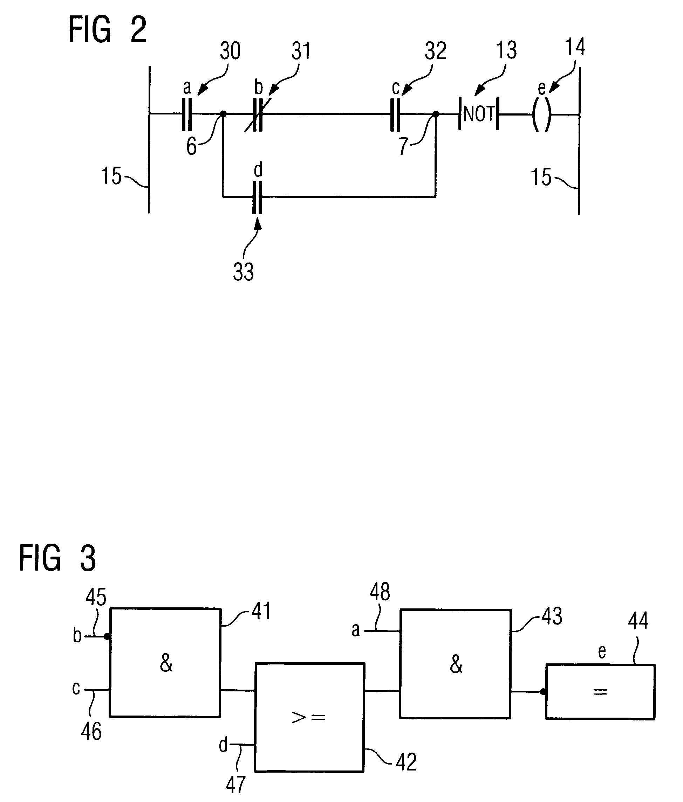

FIG 2 zeigt das Netzwerk 3 des Steuerungsprogramms 2 in Kontaktplandarstellung gemäß FIG 1. Dem logischen Anschluss eines Funktionselements in der Funktionsplandarstellung entspricht die Verbindung eines Bauteils bzw. Elements in der Kontaktplandarstellung. Die Kontakte, Spulen und Kästen sind durch Linien miteinander verbunden bzw. verdrahtet. Durch die Linien wird in FUP der Informationsfluss - in KOP der Stromfluss - dargestellt. Ein Draht verbindet eine Informationsquelle mit mehreren Informationssenken. In KOP wird ein ODER-Gatter durch eine Parallelschaltung dargestellt. Dies ist kein Widerspruch, denn der senkrechte Strich in KOP, der zum Zusammenführungspunkt 7 einer Parallelschaltung führt, ist eigentlich ein Bauteil. Auch in KOP gilt somit: Ein Draht verbindet eine Informationsquelle mit mehreren Informationssenken.

Einfache logische Funktionen wie UND werden durch eine Reihenschaltung von Kontakten 31, 32 dargestellt. Ein ODER wird durch eine Parallelschaltung von Kontakten 32, 33 dargestellt. Ein besonderes Element 1 eines Kontaktplanes ist der Kontakt 30-33. Die Kontakte dienen zur Abfrage von booleschen Operanden "a" - "e". Es wird zwischen Schließern 30, 32, 33 und Öffnern 31 unterschieden. Durch einen Öffner 31 wird die Negation eines Operanden realisiert. Ein weiteres besonderes Element ist die (Relais-)Spule 14, welche der Zuweisung eines Verknüpfungsergebnisses an einen booleschen Operanden "e" dient. Mit dem Bezugszeichen 13 ist ein Negationselement oder NOT-Element bezeichnet, welches der Invertierung des eingangsseitigen Signals dient. Links und rechts wird das Netzwerk durch Stromschienen 15 begrenzt. Andere Elemente werden durch einen Kasten dargestellt. Im Kasten steht der Name der Funktion, die durch dieses Bauteil realisiert wird, wie z.B. ein Vergleicher, eine Addition oder ein Flipflop. Im Falle von speichernden Elementen, wie z.B. im Falle der Spule 14, ist oberhalb des betreffenden Elements ein Operand "e" angegeben. Negierte Eingänge werden in Kontaktplandarstellung als durchgestrichene Kontakte 31 dargestellt.

FIG 3 zeigt ein zum Netzwerk 3' des Steuerungsprogramms 3 aus FIG 1 äquivalentes Netzwerk in einer Funktionsplandarstellung. Wie sofort festgestellt werden kann, unterscheiden sich die beiden Netzwerke komplett voneinander. Die gezeigte äquivalente Darstellungsform in der Funktionsplandarstellung ist eine beispielhaft von mehreren möglichen Darstellungsformen, welche von einem Entwicklungssystem aus der Kontaktplandarstellung des Netzwerks 3 gemäß FIG 1 umgewandelt werden kann.

Wie nun auch erkennbar ist, kann die logische Verknüpfung der Operanden a AND /b im Netzwerk 3 des Steuerungsprogramms 2 gemäß FIG 1 erreicht werden. Diese Möglichkeit fehlt aber in der korrespondierenden Funktionsplandarstellung gemäß FIG 3. So existiert keine Stelle im Funktionsplan, an der das Zwischenergebnis a AND /b zur Verfügung stehen würde.

Würde man nun zur Zwischenspeicherung eine Spule als speicherndes Element für eine Zuweisung in Signalflussrichtung nach dem Schließer 33 gemäß der FIG 2 einfügen, so repräsentiert die "Logik" dieser Spule die boolesche Beziehung a AND d. Dagegen wäre dieses Zwischenergebnis in einer bisherigen Funktionsplandarstellung nicht verfügbar. Folglich ist es nicht möglich, in diesem Funktionsplan hierzu ein speicherndes Element, wie ein Flipflop oder die Spule, einzusetzen, um dieses Zwischenergebnis auslesen zu können.

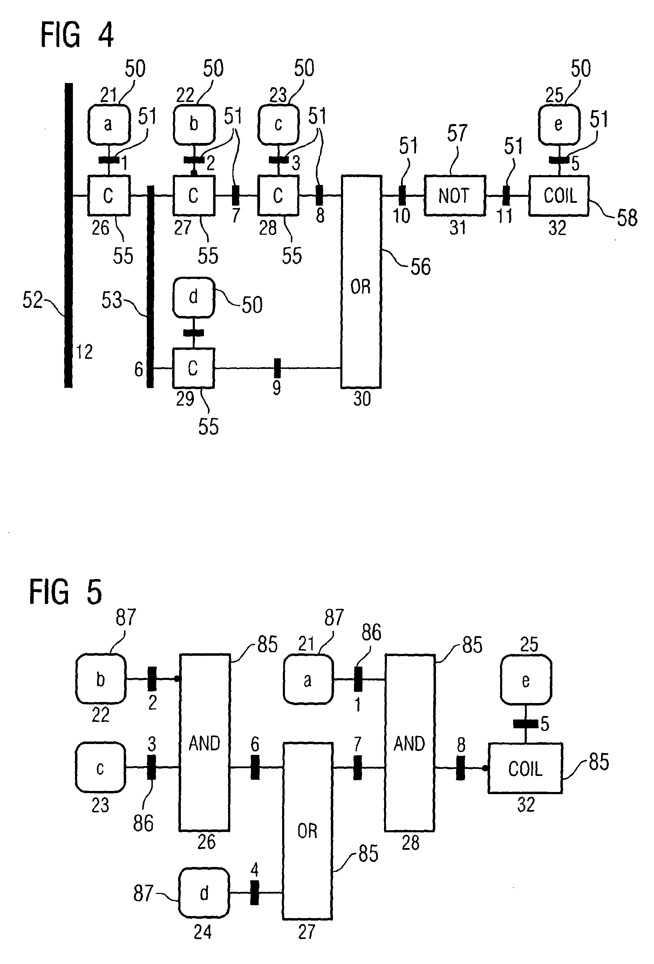

FIG 4 zeigt das Netzwerk gemäß FIG 2 in erweiterter graphischer Kontaktplandarstellung. Bauteile sind durch Kästen 55-58 dargestellt. Innerhalb eines Kastens 55-58 befindet sich der Gattername oder die Funktion. Der Buchstabe "C" steht dabei für Kontakt. Die Kontakte 55 haben jeweils drei Anschlüsse. Eine Verbindung zwischen den Kästen 55-58 wird als Draht bezeichnet. Die Kästen 50 mit abgerundeten Ecken entsprechen den Operanden "a"-"e". Alle Bauteile, Operanden und Drähte müssen vom System bezeichnet werden, damit sie referenzierbar sind. Sie werden daher durchnummeriert. Die Bezeichner der Bauteile und Verbindungen sind für den Anwender nur von geringem Nutzen, da dieser üblicherweise mit einer Maus oder einem anderen graphischen Eingabegerät selektiert.

Die erweiterte graphische Kontaktplandarstellung ist eine mögliche systeminterne Darstellung des Netzwerks in KOP. In gleicher Weise kann zur systeminternen Darstellung des Netzwerks in FUP eine weitestgehend ähnliche erweiterte graphische Darstellung verwendet werden. Beide Sprachen sind sich so ähnlich, dass sie durch dieselben Strukturen dargestellt werden können.

Unterschiede zwischen KOP und FUP:
- Zugriffe auf boolesche Operanden werden durch Kontakte und Spulen realisiert.
- In KOP existiert kein UND-Element. Das UND-Element wird durch Reihenschaltung von Kontakten realisiert.
- Das ODER wird durch eine Parallelschaltung von Kontakten realisiert.
- Eingänge werden üblicherweise nicht negiert. Stattdessen werden Öffner verwendet.
- Ausgänge werden über ein Negationselement negiert.
- Alle anderen Elemente sind in beiden Sprachen vorhanden, wenn gleich die graphische Ausgestaltung unterschiedlich sein mag.
- Ein Netzwerk in KOP enthält Stromschienen, wobei nur die linke Stromquelle als Signalquelle relevant ist. Die rechte Stromschiene kann folglich weggelassen werden.

Die Unterschiede sind beispielhaft an der nachfolgenden FIG 5 gezeigt.

FIG 5 zeigt das Netzwerk gemäß FIG 3 in erweiterter graphischer Funktionsplandarstellung. Wie ersichtlich ist, werden für Verbindungen oder Drähte 86 sowie für die Operanden 87 und Funktions- bzw. Bauelemente 85 die gleichen graphischen Objekte verwendet. Auf diese Weise ist eine rechnergestützte und automatisierte Umwandlung von der erweiterten graphischen Kontaktplandarstellung in die erweiterte graphische Funktionsplandarstellung und umgekehrt möglich. Hierzu dienen die durchnummerierten Referenzierungen der Bauelemente, Drähte etc..

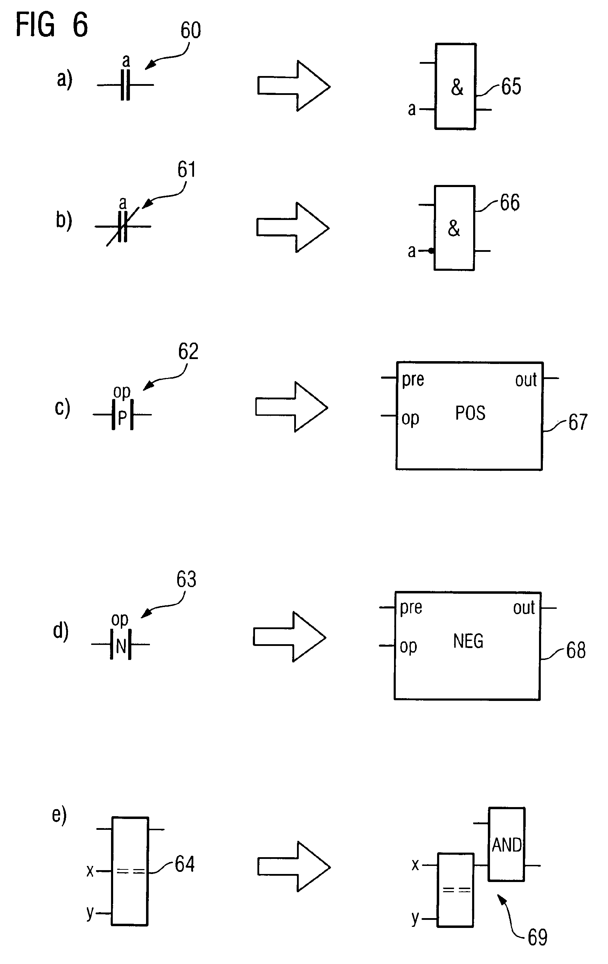

FIG 6 zeigt Beispiele von transformierten Kontakten bzw. kontaktähnlichen Elementen 65-69. Für die nachfolgende Darstellung wird zur Beschreibung der Transformation der Übersichtlichkeit halber die gewöhnliche Darstellung eines Netzwerks in KOP und FUP dargestellt.

Die oberste Darstellung in FIG 6 zeigt einen Schließer als Kontakt 60, welcher in ein UND-Element 65 umgewandelt wird. Da ein Kontakt die UND-Verknüpfung seines linken Eingangs mit dem Operanden darstellt, kann er durch ein UND-Element mit zwei Eingängen ersetzt werden.

Die zweite Darstellung zeigt einen Öffner als Kontakt 61, welcher in ein UND-Element 66 umgewandelt wird. Da ein Kontakt die UND-Verknüpfung seines linken Eingangs mit dem Operanden darstellt, kann er durch ein UND-Element mit zwei Eingängen ersetzt werden. Der zweite Eingang des UND-Elements übernimmt dabei die Negation.

Die dritte und vierte Darstellung zeigt einen positiven und negativen Flankenerkenner 62, 63. Diese werden in Form eines Kastens 67, 68 mit je einem "pre"-Eingang und je einem "out"-Ausgang dargestellt. Der Operand "op" wird auf den "op"-Operanden-Eingang abgebildet. Bei kontaktähnlichen Bauteilen wird am "pre"-Eingang (in der Zeichnung links) die Vorverschaltung angeschlossen.

Die letzte Darstellung zeigt ein weiteres kontaktähnliches Element 64. Es handelt sich dabei um einen Vergleicher. Vergleicher können ebenfalls in Reihenschaltungen eingebaut werden. Der Ausgang ist dann "true", wenn die beiden Eingänge x, y einen gleichen booleschen Wert aufweisen und der "pre"-Eingang "true" ist.

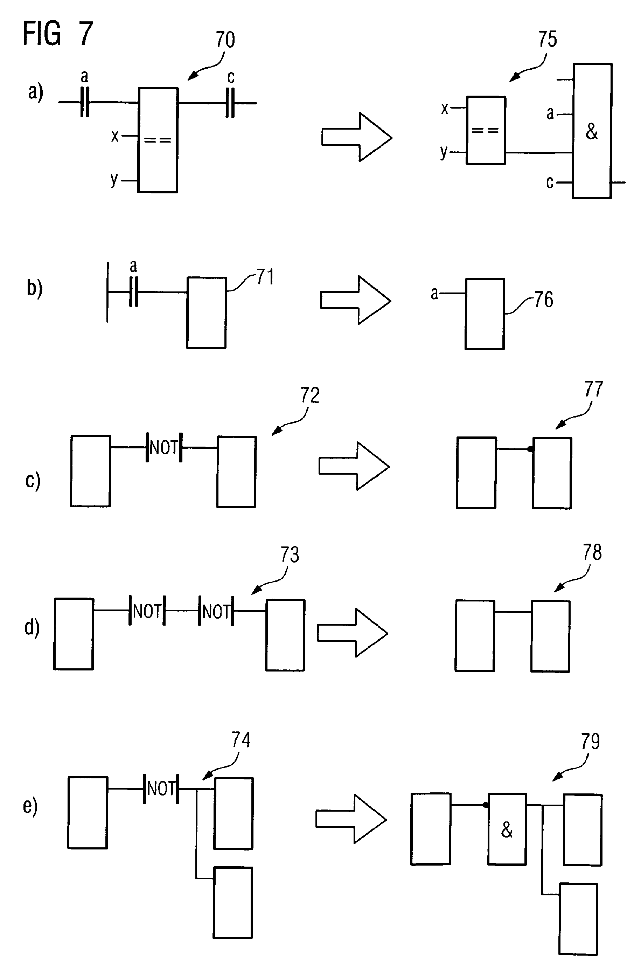

FIG 7 zeigt Beispiele von transformierten Reihenschaltungen, einer Stromschienenanbindung und Negationselementen.

Die erste Darstellung zeigt einen Vergleicher als kontaktähnliches Bauelement in einer Reihenschaltung 70 zu zwei Kontakten. In der transformierten Darstellung würde jeder Kontakt zu einem UND-Element führen. Zwei hintereinander geschaltete UND-Elemente können aber zu einem UND-Element zusammengefasst werden. Dies erfolgt nachfolgend für alle Elemente der Reihenschaltung in rekursiver Weise.

Die zweite Darstellung zeigt eine Anbindung eines Kontakts 71 an eine Stromschiene. Die linke Stromschiene entspricht einem booleschen "true". Die ist das neutrale Element des UND-Elements. Daraus folgt, dass an der Stromschiene angeschlossene kontaktähnliche Elemente bei der Transformation ersatzlos gestrichen werden können. Die Referenzen der Operanden können direkt weiterverwendet werden. Die Stromschiene kann ebenfalls ersatzlos gestrichen werden.

Die dritte Darstellung zeigt die Transformation eines Negationselements. Aus dem gezeigten NOT-Element wird eine Negation des folgenden Eingangs. Das NOT-Element und der daran angeschlossene Draht werden entfernt.

Die vierte Darstellung zeigt die Transformation zweier hintereinander geschalteter Negationselemente. Bei einer doppelten Negation wird der folgende Eingang zweimal negiert, d.h. die Negation verschwindet. Dies ist im rechten Teil der Darstellung gezeigt.

Die fünfte Darstellung zeigt die Transformation eines NOT-Elements, welches mit den Eingängen zweier nachfolgender Element verbunden ist. Ist das NOT-Element an mehr als einem Eingang angeschlossen, so wird für das NOT-Element ein UND-Element eingefügt. Dies stellt sicher, dass die Negation nicht verloren geht, wenn sich links vom NOT-Element eine Referenz befindet. Wäre links des NOT-Elements ein Bauteil bzw. Element, so könnte auch dessen Ausgang negiert werden.

Das rekursive Regelwerk zur Transformation eines Netzwerks wird im Folgenden im Detail beschrieben:
1. Zuerst wird die Stromschiene ermittelt, von welcher der Signalfluss ausgeht. Alle daran angeschlossenen Kontakte werden nach den zuvor gezeigten Transformationsregeln für Schließer, Öffner, Flankenerkenner, Vergleicher ersetzt. Für Kontakte ersetzt der am Operanden-Eingang angeschlossene Draht den am Kontakt-Ausgang angeschlossenen Draht. Der am Kontakt angeschlossene Draht übergibt dazu alle ausgangsseitigen Verbindungen an den am Operanden-Eingang angeschlossenen Draht und wird anschließend gelöscht. War der Operanden-Eingang negiert, so wird bei allen übergebenen Verbindungen die Negation umgedreht. Der Kontakt selbst und der Draht der Stromschiene werden gelöscht.
2. Alle Negationselemente werden gesammelt.
3. Alle kontaktähnlichen Elemente wie Kontakte, Vergleicher oder Flankenerkenner werden gesammelt, wenn sie den Beginn einer Reihenschaltung darstellen. Das ist dann der Fall, wenn der am Kontakteingang, bzw. "pre"-Eingang bei Vergleichern und Flankenerkennern, angeschlossene Draht nicht nur am Ausgang genau eines anderen kontaktähnlichen Elements angeschlossen ist.
4. Für jeden gesammelten Reihenschaltungsanfang wird ein UND-Element erzeugt.
   4.1 Wenn die Reihenschaltung mit einem Kontakt beginnt, wird der Kontakt als zu löschen vermerkt. Der am Operanden-Eingang angeschlossene Draht wird als zukünftiger UND-Eingang vermerkt. Eine eventuell am Operanden-Eingang vorhandene Negation wird ebenfalls vermerkt.
   4.2 Wenn die Reihenschaltung mit einem Vergleicher oder einem Flankenerkenner beginnt, wird der am "pre"-Eingang angeschlossene Draht als zukünftiger UND-Eingang vermerkt. Eine eventuell am "pre"-Eingang vorhandene Negation wird ebenfalls vermerkt.
   4.3 Der am Ausgang angeschlossene Draht wird nun weiter untersucht. Ist dieser mit dem Eingang eines kontaktähnlichen Elements verbunden, so werden die nachfolgenden Schritte 4.3.1 bis 4.3.4 ausgeführt, anderenfalls wird zu Schritt 4.4 verzweigt.
      4.3.1 War das untersuchte Element ein Kontakt, so wird der an dessen Ausgang angeschlossene Draht als zu löschen vermerkt.
      4.3.2 Nun wird das am Draht angeschlossene Element untersucht. Handelt es sich um einen Kontakt, so wird der am Operanden-Eingang angeschlossene Draht als zukünftiger UND-Eingang vermerkt. Der Kontakt und der am Ausgang angeschlossene Draht werden als zu löschen vermerkt.
      4.3.3 Handelt es sich um einen Vergleicher oder Flankenerkenner, so wird der am "pre"-Eingang angeschlossene Draht weggelassen und der am Ausgang angeschlossene Draht als zukünftiger UND-Eingang vermerkt.
      4.3.4 Der am Ausgang angeschlossene Draht wird nun weiter untersucht. Ist dieser mit dem Eingang eines kontaktähnlichen Elements verbunden, so werden die Schritte ab 4.3.1 wiederholt.
   4.4 War das zuletzt untersuchte Element kein Kontakt, so wird ein zusätzlicher Draht erzeugt und als zukünftiger UND-Eingang vermerkt. Dieser Draht wird als erster mit dem Ausgang des zuletzt untersuchten Elements verbunden.
   4.5 Die Anzahl der als zukünftige UND-Eingänge vermerkten Drähte plus 1 ergibt die Kardialität des zu erzeugenden UND-Elements. Dieses kann nun erzeugt werden. Dessen Ausgang ersetzt am zuletzt untersuchten Draht das zuletzt untersuchte Element.
   4.6 Die als zukünftige Eingänge vermerkten Drähte werden nun mit den Eingängen des UND-Elements verbunden, d.h. die bisherige Verbindung wird durch den Gattereingang ersetzt. War die bisherige Verbindung negiert, so muss nun der UND-Eingang negiert werden.
   4.7 Der erste Eingang des UND-Elements wird mit dem Eingang des ersten Elements der Reihenschaltung verbunden. War der Eingang des ersten Elements der Reihenschaltung negiert, muss auch der erste Eingang des UND-Elements negiert werden.
   4.8. Abschließend werden alle als zu löschen markierten Elemente und Drähte gelöscht.
5. Alle Negationen werden nach den oben beschriebenen Regeln ersetzt. Dabei ist zu unterscheiden, ob der Ausgang des Negationselements mehrfach verwendet wurde. Das Negationselement wird gelöscht und gegebenenfalls durch ein "einarmiges" UND-Element im Sinne eines Inverters ersetzt.

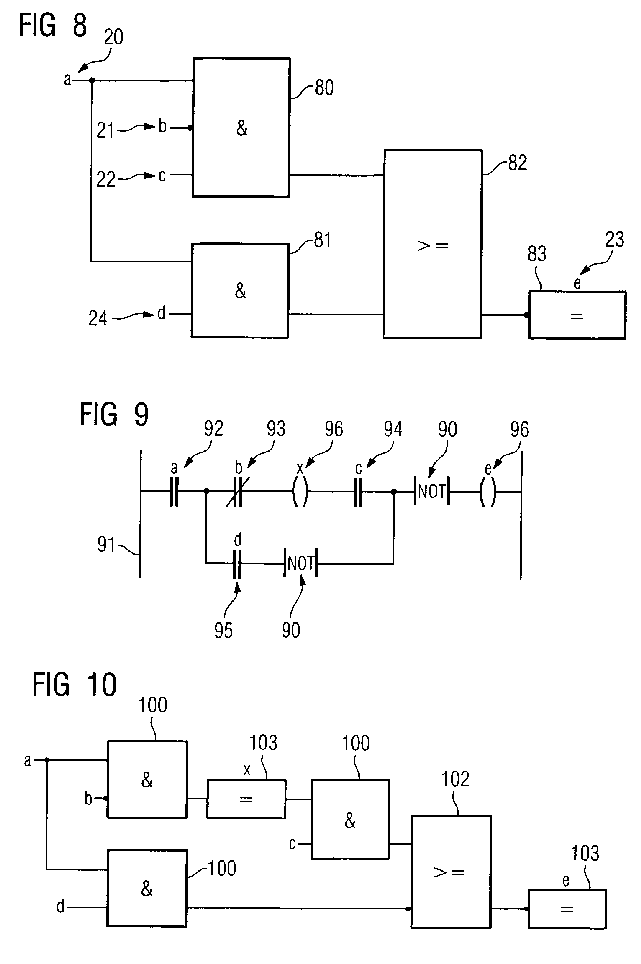

FIG 8 zeigt ein Netzwerk in Funktionsplandarstellung, welches aus dem Netzwerk gemäß FIG 2 transformiert wurde. Wie zu sehen ist, werden die Operanden "a"-"d" über die UND-Elemente erreicht.

FIG 9 zeigt ein Beispiel eines Netzwerks in Kontaktplandarstellung mit einer Zuweisung in einer Parallelschaltung des Netzwerks gemäß der Erfindung. Die Zuweisung dient, wie bereits beschrieben, um interne Zustände des Netzwerks im Steuerprogramm und im späteren Betrieb in einem Steuerungsrechner auslesen zu können. Mit der Kenntnis der internen Zustände ist eine rasche Fehlerbehebung vorteilhaft möglich. Im Beispiel der FIG 9 ist die boolesche Verknüpfung a AND /b sowohl in KOP als auch in FUP erreichbar ist.

FIG 10 zeigt das zugehörige transformierte Netzwerk in der Funktionsplandarstellung. Die zuvor genannte boolesche Verknüpfung a AND /b ist dabei im oberen UND-Element verfügbar. Diese boolesche Verknüpfung ist dann auch bei der direkten Umsetzung des KOP in eine Anweisungsliste AWL verfügbar.

Zusammenfassend betrifft die Erfindung ein Verfahren und System zur Transformation von Elementen 1 eines in einer Kontaktplandarstellung vorliegenden Steuerungsprogramms 2 in eine Funktionsplandarstellung, wobei das Steuerungsprogramm 2 mindestens ein Netzwerk 3 mit Elementen 1 aufweist, welche mit ihren Ein-/Ausgängen 4 und/oder Operanden 5 untereinander verbindbar sind, wobei das System Mittel 8 zur Transformation von Parallelschaltungen von Elementen 1 in je ein ODER-Element 10 und Reihenschaltungen von Elementen 1 in je ein UND-Element 11 auf Basis eines rekursiven Regelwerks erfolgt. Durch die Umwandlung der Reihenschaltungen in UND-Elemente 11 sind die gewünschten Operanden 5 zur Abfrage eines Zwischenergebnisses erreichbar und können auf eine Spule verschaltet werden. Diese oder Kombinationen davon finden sich in der jeweiligen Berechnung eines UND-Elements 11 wieder.

## Patentansprüche

1. Verfahren zur Transformation von Elementen (1) eines in einer Kontaktplandarstellung vorliegenden Steuerungsprogramms (2) in eine Funktionsplandarstellung, wobei das Steuerungsprogramm (2) mindestens ein Netzwerk (3) mit Elementen (1) aufweist, welche mit ihren Ein-/Ausgängen (4) und/oder Operanden (5) untereinander verbunden sind, wobei Parallelschaltung von Elementen (1) in je ein ODER-Element (10) und Reihenschaltungen von Elementen (1) in je ein UND-Element (11) umgewandelt werden und wobei die Transformation der Parallel- und Reihenschaltungen in ODER- und UND-Elemente (10, 11) auf Basis eines rekursiven Regelwerks erfolgt.

2. Verfahren nach Anspruch 1, wobei der Ausgang des jeweiligen UND-Elements (11) mit einem Eingang des ODER-Elements (10) verbunden wird, wobei Eingänge der jeweiligen UND-Elemente (11) mit dem Operanden (5) des zumindest einen Elements (1) in der jeweiligen Reihenschaltung verbunden werden und wobei ein weiterer Eingang mit dem Operanden (5) des der Reihenschaltung vorgeschalteten Elements (1) verbunden wird.

3. Verfahren nach Anspruch 1 oder 2, wobei der Operand (5) eines jeden Kontakts (12), der mit einer Stromschiene (15) als Quelle für den Signalfluss verbunden ist, in einen Eingang eines nachfolgenden Elements (1) umgewandelt wird.

4. Verfahren nach einem der vorangegangenen Ansprüche, wobei das Netzwerk (3) Kontakte (12), insbesondere Schließer, Öffner, Flankenerkenner oder Vergleicher, zur Abfrage der Operanden (5) aufweisen kann.

5. Verfahren nach einem der vorangegangenen Ansprüche, wobei das Netzwerk (3) speichernde Elemente (14) wie Flip-Flops oder Spulen aufweisen kann.

6. Verfahren nach einem der vorangegangenen Ansprüche, wobei das Netzwerk (3) zumindest ein Negationselement (13) aufweisen kann und wobei bei der Transformation dann ein zugehöriger Eingang (4) eines zumindest nachfolgenden Elements (1) negiert wird.

7. Verfahren nach einem der vorangegangenen Ansprüche, wobei vor der Transformation der Elemente (1) geprüft wird, ob die jeweiligen untereinander verbundenen Ein- und Ausgänge (4) bzw. Operanden (5) der Elemente (1) zueinander kompatibel sind.

8. System zur Transformation von Elementen (1) eines in einer Kontaktplandarstellung vorliegenden Steuerungsprogramms (2) in eine Funktionsplandarstellung, wobei das Steuerungsprogramm (2) mindestens ein Netzwerk (3) mit Elementen (1) aufweist, welche mit ihren Ein-/Ausgängen (4) und/oder Operanden (5) untereinander verbindbar sind, wobei das System Mittel (8) zur Transformation von Parallelschaltung von Elementen (1) in je ein ODER-Element (10) und Reihenschaltungen von Elementen (1) in je ein UND-Element (11) auf Basis eines rekursiven Regelwerks aufweist.

9. System nach Anspruch 8, wobei das System einen Graphikeditor zur Eingabe und/oder Änderung des Netzwerks (3) in der Kontaktplandarstellung und/oder in der Funktionsplandarstellung aufweist.

10. System nach Anspruch 8 oder 9, wobei das System Umwandlungsmittel (9) zur Umwandlung der graphischen Elemente (1) des Steuerprogramms (2) in maschinennahe Befehle (17) des Steuerprogramms (2) zur rechnergestützten Ausführung der Befehle (17) auf einer speicherprogrammierbaren Steuerung (18) zur Steuerung und/oder Regelung eines technischen Prozesses und/oder einer technischen Anlage (19) aufweist.
